# EUROPÄISCHE PATENTANMELDUNG

(11) **EP 0 759 509 A2**
(43) Veröffentlichungstag der Anmeldung: **26.02.1997**
(21) Anmeldenummer: 96109286.3
(22) Anmeldetag: 11.06.1996
(51) Int. Cl.: F15B 15/08

(54) **Fluidbetätigter Drehantrieb**

(30) Priorität: 19.08.1995 DE 19530519
(71) Anmelder: Festo KG, D-73734 Esslingen (DE)
(72) Erfinder: Stoll, Kurt, Dipl.-Ing. Dr., 73732 Esslingen (DE); Köngeter, Herbert, 73262 Reichenbach (DE)
(74) Vertreter: Abel, Martin, Dipl.-Ing.

(57) **Zusammenfassung**

Es wird ein fluidbetätigter Drehantrieb vorgeschlagen, der ein Gehäuse (2) und einen darin axial beweglich geführten Kolben (13) aufweist. Der Kolben (13) ist von einer am Gehäuse (2) drehbar gelagerten Abtriebswelle (23) durchsetzt. An der Abtriebswelle ist ein Antriebsabschnitt (27) vorgesehen, der eine Wendelnut (28) aufweist, in die ein am Kolben (13) angeordnetes Führungsglied (42) eingreift. Zur Abdichtung der Arbeitskammern (18, 19) des Drehantriebes wirkt der Kolben (13) dichtend mit sich an den Antriebsabschnitt (27) anschließenden Wellenabschnitten (32) zusammen. Eine Axialbewegung des Kolbens (13) resultiert in einer Drehbewegung der Abtriebswelle (23).

## Beschreibung

Die Erfindung betrifft einen fluidbetätigten Drehantrieb, mit einem Gehäuse, das eine Gehäusekammer vorgibt, die einen durch Fluidkraft zu einer Axialbewegung antreibbaren, bezüglich des Gehäuses unverdrehbaren Kolben enthält, mit einer an wenigstens einer Stirnseite aus dem Gehäuse herausragenden, bezüglich des Gehäuses drehbaren und zugleich axial unbeweglich fixierten Abtriebswelle, die mit dem Kolben in Drehantriebsverbindung steht und bei der Axialbewegung des Kolbens zu einer Drehbewegung veranlaßt wird, indem eine sich bezüglich der Längsachse der Abtriebswelle axial und in Umfangsrichtung erstreckende abtriebswellenseitige Wendelnut an mindestens einem in die Wendelnut eingreifenden kolbenseitigen Führungsglied entlangläuft.

Ein derartiger Drehantrieb wird in dem Prospektauszug "STELLANTRIEBE in der Praxis bewährt", Seiten 77 - 80, der Firma Carter beschrieben. Er verfügt über einen an zwei Führungsstangen unverdrehbar linear beweglich geführten Kolben, an dem vermutlich mindestens ein stiftartiges Führungsglied angeordnet ist, das in eine schraubenförmig ausgebildete Wendelnut eingreift, die sich an der Abtriebswelle befindet. Die Abtriebswelle selbst ist drehbar, jedoch axial unbeweglich am Gehäuse des Drehantriebes gelagert. Wird der Kolben durch Fluidzufuhr axial verschoben, läuft das Führungsglied entlang der Zugeordneten Wendelnut, was infolge der verdrehgesicherten Anordnung des Kolbens in einer Drehbewegung der Abtriebswelle resultiert, die sich außen abgreifen läßt.

Drehantriebe dieser Art lassen sich beispielsweise zur Betätigung von Ventilgliedern von Fluidventilen einsetzen, beispielsweise zum Drehen des Ventilgliedes eines Kugelhahnes. Aber auch andere, durch Drehung betätigbare Einrichtungen lassen sich mit Hilfe des Drehantriebes betreiben.

Bei dem bekannten Drehantrieb wird eine speziell ausgeformte Wellendichtung benötigt, um den Kolben bezüglich der von ihm umschlossenen Abtriebswelle abzudichten. Dabei besteht das Problem, daß die Wellendichtung infolge des ständigen Kontaktes mit scharfkantigen Flanken der Wendelnut zu raschem Verschleiß neigt.

Es ist die Aufgabe der vorliegenden Erfindung, einen fluidbetätigten Drehantrieb der eingangs genannten Art zu schaffen, der bei einfacherem Aufbau weniger verschleißanfällig ist.

Zur Lösung dieser Aufgabe ist vorgesehen, daß die Wendelnut von einem nach Art einer Gewindespindel ausgeführten Antriebsabschnitt der Abtriebswelle gebildet ist, dessen Länge geringer ist als die Länge der Gehäusekammer und an den sich axial beidseits ein wendelnutloser Wellenabschnitt der Abtriebswelle anschließt, und daß der Antriebsabschnitt in einer Kolbenkammer im Innern des Kolbens aufgenommen ist, deren axiale Länge größer ist als diejenige des Antriebsabschnittes, wobei jede der beiden die Kolbenkammer axialseitig abschließenden kolbenseitigen Wände vom zugeordneten wendelnutlosen Wellenabschnitt der Abtriebswelle axial verschiebbar unter Abdichtung durchsetzt ist.

Auf diese Weise wird der Kolben von der Wendelnut nicht mehr vollständig durchsetzt. Die Wendelnut befindet sich an einem nach Art einer Gewindespindel ausgeführten Antriebsabschnitt, der praktisch gekapselt im Innern des Kolbens in einer Kolbenkammer aufgenommen ist, die zu beiden Axialseiten hin gegenüber der Abtriebswelle abgedichtet ist. Die Abdichtung erfolgt vorteilhafterweise durch Zusammenwirken mit den sich axial an den Antriebsabschnitt anschließenden Wellenabschnitten der Abtriebswelle, die keine Wendelnut aufweisen, so daß sich eine glattflächige Oberfläche ergibt, die mit konventionellen Dichtungsringen abgedichtet werden kann. Auf diese Weise kann auf handelsübliche Bauteile zurückgegriffen werden, was die Gestehungskosten des Drehantriebes niedrig hält. Des weiteren ist der Verschleiß reduziert, weil die getroffenen Abdichtmaßnahmen von der Wendelnut nicht beeinträchtigt werden. Zweckmäßigerweise ist die Wendelnut nach Art eines Steilgewindes ausgebildet, so daß bereits ein geringer axialer Hub des Kolbens einen großen Drehwinkel der Abtriebswelle hervorruft. Auf diese Weise wäre es denkbar, einen Drehantrieb zu verwirklichen, dessen Kolben einen Hub von um die 40 mm aufweist, der in einer Drehung von etwa 360° der Abtriebswelle resultiert. Es sind fluidbetätigte Drehantriebe denkbar, die bei einer Baulänge von ca. 400 mm einen Drehwinkel der Abtriebswelle von etwa 720° ermöglichen.

Vorteilhafte Weiterbildungen der Erfindung sind in den Unteransprüchen aufgeführt.

Zugunsten des einfachen Aufbaus ist es besonders empfehlenswert, einen Kolben vorzusehen, der eine unkreisförmige Außenkontur aufweist, die vorzugsweise ellipsenähnlich oder oval ausgebildet ist, wobei die Gehäusekammer komplementär konturiert ist. In diesem Falle wird allein durch die unkreisförmige Konturierung eine Verdrehsicherung erzielt, und man kann auf Verdrehsicherungsmaßnahmen, die zusätzliche aufwendige Abdichtungen verursachen, zugunsten reduzierter Herstellungskosten verzichten. Gleichzeitig hat diese Ausführungsform den Vorteil, daß kompakte Querabmessungen erzielbar sind, wobei sich speziell solche Ausführungsformen anbieten, bei denen das Gehäuse außen rechteckförmig konturiert ist.

Zweckmäßigerweise sind am Kolben wenigstens zwei Führungsglieder vorhanden, die an axial beabstandeten Stellen mit der Wendelnut in Eingriff stehen. Ein jeweiliges Führungsglied kann in bevorzugter Ausgestaltung von einem ringförmigen Wälzlager gebildet sein, das den Abtriebsabschnitt umgibt, wobei eine mit Bezug zur Längsachse der Abtriebswelle exzentrische Anordnung bevorzugt wird.

Das ein Führungsglied bildende Wälzlager ist zweckmäßigerweise mit Bezug zur Abtriebswelle schrägggestellt, so daß seine Ringebene unter einem spitzen Winkel zu einer Radialebene der Abtriebswelle verläuft. Auf diese Weise kann man beispielsweise erreichen, daß das betreffende Führungsglied bevorzugt gegen eine der beiden Flanken der Wendelnut arbeitet, was bei Kombination zweier mit entgegengesetzter Schrägstellung angeordneter Wälzlager den vorteilhaften Effekt einer axial spielfreien Fixierung der Abtriebswelle relativ zum Kolben haben kann.

Nachfolgend wird die Erfindung anhand der beiliegenden Zeichnung näher erläutert. In dieser zeigen:
- Fig. 1: eine erste Bauform des erfindungsgemäßen fluidbetätigten Drehantriebes im Längsschnitt gemäß Schnittlinie I-I aus Fig. 2 und
- Fig. 2: einen Querschnitt durch den fluidbetätigten Drehantrieb aus Fig. 1 gemäß Schnittlinie II-II.

Der beispielsgemäße Drehantrieb 1 besitzt ein Gehäuse 2 mit einem rohrförmigem Gehäuseabschnitt 3, der an beiden Enden durch Abschlußwände 4, 5 verschlossen ist. Das Gehäuse 2 enthält im Innern eine Gehäusekammer 6 mit linearer Erstreckung.

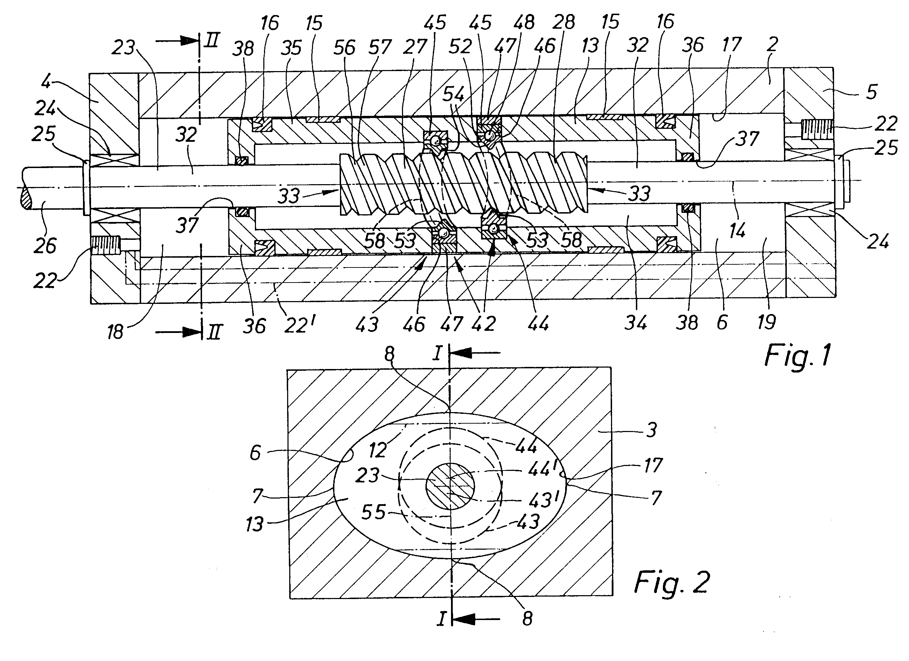

Die Gehäusekammer 6 ist im Querschnitt gesehen (vgl. Fig. 2) unkreisförmig konturiert. Sie hat bevorzugt eine ellipsenähnliche oder ovale Kontur ohne Kanten. Beispielsgemäß verfügt der Umriß durchgehend über eine Krümmung, wobei die Krümmung im Bereich der beiden Hauptscheitel am größten ist. Denkbar wäre aber auch eine Bauform, die sich als "Flachoval" bezeichnen ließe, bei der die Kontur im Bereich der geringere Krümmung aufweisenden Nebenscheitel 8 abgeflacht ist, wie dies strichpunktiert bei 12 angedeutet ist.

Außen ist das Gehäuse 2 im Querschnitt gesehen zweckmäßigerweise rechteckförmig konturiert. Die Ausrichtung der Gehäusekammer 6 ist bevorzugt so getroffen, daß die beiden Hauptscheitel 7 den im Querschnitt kürzeren und die beiden Nebenscheitel 8 den im Querschnitt längeren Außenflächen des rohrförmigen Gehäuseabschnittes 3 zugewandt sind. Auf diese Weise ist insgesamt eine kompakte Bauform möglich.

In der Gehäusekammer 6 ist axial beweglich ein Kolben 13 aufgenommen. Seine Außenkontur ist im Querschnitt gesehen komplementär zur Gehäusekammer 6 ausgebildet, so daß er bezüglich der Längsachse 14 unverdrehbar in der Gehäusekammer 6 gelagert ist. Zur Verschiebelagerung können am Außenumfang des Kolbens 13 Gleitringe 15 vorgesehen sein. Des weiteren trägt der Kolben 13 im Bereich seines Außenumfanges eine oder mehrere ringförmige Dichtungen 16, die an der umfangsseitigen Innenfläche 17 der Gehäusekammer 6 dichtend anliegen. Auf diese Weise unterteilt der Kolben 13 die Gehäusekammer 6 axial in zwei Arbeitsräume 18, 19.

Jeder Arbeitsraum 18, 19 kommuniziert mit einem das Gehäuse 2 durchsetzenden Fluidkanal 22, über den unter Druck stehendes Fluid zugeführt oder abgeführt werden kann. Bevorzugt ist eine Betriebsweise mit Druckluft vorgesehen. Auf diese Weise läßt sich der Kolben 13 zu einer Linearbewegung in Richtung der Längsachse 14 in der einen oder anderen Richtung antreiben.

Der einem jeweiligen Arbeitsraum 18, 19 zugeordnete Fluidkanal durchsetzt beispielsgemäß die zugeordnete Abschlußwand 4, 5 und mündet an dieser außen derart aus, daß Druckmittelleitungen anschließbar sind. Allerdings ist auch eine Kanalführung möglich, bei der beide Fluidkanäle 22 an einer gemeinsamen Stirnseite des Gehäuses 2 ausmünden, beispielsweise an der rückwärtigen Abschlußwand 5, was durch den strichpunktierten Kanalverlauf 22' angedeutet ist.

Das Gehäuse 2 ist koaxial von einer Abtriebswelle 23 durchsetzt. Diese ist in beiden Abschlußwänden 4, 5 mittels geeigneter Lagereinrichtungen 24, insbesondere in Form von Radial-Wälzlagern, drehgelagert. Des weiteren sind an den Durchdringungsbereichen nicht näher dargestellte Dichtungseinrichtungen vorgesehen, mit denen eine fluiddichte Abdichtung zwischen den Abschlußwänden 4, 5 und der Abtriebswelle 23 erreicht wird. Auf diese Weise ist ein unbeabsichtiger Fluidaustritt aus den Arbeitsräumen 18, 19 ausgeschlossen.

Die Abtriebswelle 23 ist bezüglich des Gehäuses 2 in Längsrichtung 14 unbeweglich fixiert. Beispielsgemäß erfolgt dies mit Hilfe von Sicherungsringen 25, die auf den außerhalb des Gehäuses 2 liegenden Abschnitten der Abtriebswelle 23 verankert sind und sich zweckmäßigerweise an den Lagereinrichtungen 24 abstützen können.

Wird die Abtriebswelle 23 in Drehung versetzt, läßt sich diese Drehbewegung an einem außerhalb des Gehäuses 2 liegenden Abtriebsabschnitt 26 der Abtriebswelle 23 abgreifen. Der Abtriebsabschnitt 26 hat zu diesem Zweck eine nicht näher dargestellte Einrichtung zur Verbindung mit dem zu betätigenden Bauteil.

Der Kolben 13 steht mit der Abtriebswelle 23 in Drehantriebsverbindung. Diese ist derart ausgeführt, daß eine Axialbewegung des Kolbens 13 in eine Drehbewegung der Abtriebswelle 23 umgesetzt wird. Die Drehrichtung der Abtriebswelle 23 hängt von der Verschieberichtung des Kolbens 13 ab. Die Maßnahmen zur Herstellung der Drehantriebsverbindung werden nachstehend erläutert.

Die Abtriebswelle 23 besitzt im Innern der Gehäusekammer 6 einen als Antriebsabschnitt 27 bezeichneten Längenabschnitt, der am Außenumfang mit einer vom einen zum anderen axialen Ende durchgehenden Wendelnut 28 versehen ist. Der Antriebsabschnitt 27 ist nach Art einer Gewindespindel ausgeführt, wobei die Wendelnut 28 die sich schrauben- bzw. wendelförmig erstreckenden Gewindegänge des Gewindes definiert. Das von der Wendelnut 28 gebildete Gewinde ist als Steilgewinde ausgeführt, so daß eine relativ große Anzahl von Gewindegängen auf geringer Längenausdehnung Platz findet.

Der Antriebsabschnitt 27 ist zweckmäßigerweise im Bereich der Mitte der Länge der Gehäusekammer 6 plaziert. Seine Länge ist geringer als die Länge der Gehäusekammer 6. An den Antriebsabschnitt 27 schließt sich axial beidseits jeweils ein keine Nut aufweisender wendelnutloser Wellenabschnitt 32 koaxial an, der dann in die jeweils zugeordnete Lagereinrichtung 24 eingreift und dort drehgelagert ist. Der wendelnutlose Wellenabschnitt 32 ist ein einfacher kreiszylindrischer Stangenabschnitt, dessen Oberfläche zweckmäßigerweise gute Gleiteigenschaften aufweist.

Bevorzugt ist der Durchmesser der wendelnutlosen Wellenabschnitte 32 geringer als derjenige des Antriebsabschnittes 27. Der Obergangsbereich zwischen den aneinandergrenzenden Abschnitten der Abtriebswelle 23 ist somit jeweils nach Art einer ringförmigen Stufe 33 ausgeführt.

Der Kolben 13 wird von der Abtriebswelle 23 koaxial durchsetzt. Im Innern des Kolbens 13 ist eine Kolbenkammer 34 ausgebildet, in der sich der Antriebsabschnitt 27 befindet. Umfangsseitig wird die Kolbenkammer 34 von einem rohrförmigen Kolbenabschnitt 35 begrenzt, der zweckmäßigerweise die Gleitringe 15 und Dichtungen 16 trägt. Dem axialseitigen Abschluß der Kolbenkammer 34 dienen stirnseitige Kolbenwände 36, die eine zentrale Durchbrechung 37 aufweisen, die vom jeweils zugeordneten wendelnutlosen Wellenabschnitt 32 durchsetzt ist.

Die axiale Länge der Kolbenkammer 34 ist größer als die axiale Länge des Antriebsabschnittes 27. Dadurch hat der Kolben 13 axialen Bewegungsspielraum, unbeeinträchtigt vom Antriebsabschnitt 27. Zweckmäßigerweise sind die Abmessungen so getroffen, daß der Kolben 13 bei Bewegung in einer Richtung mit der vorne angeordneten Kolbenwand 36 auf die zugeordnete Abschlußwand 4, 5 des Gehäuses 2 aufläuft, bevor die entgegengesetzte Kolbenwand 36 auf die zugewandte Stufe 33 aufprallt. Auf diese Weise wird der Antriebsabschnitt 27 vor Beschädigung geschützt.

Es wäre allerdings auch denkbar, die Stufe 33 als Bewegungsanschlag für die Axialbewegung des Kolbens 13 heranzuziehen. Hierzu bedarf es lediglich einer längenmäßigen Abstimmung der relevanten Bauteile.

Im Bereich der zentralen Durchbrechungen 37 sind zwischen einer jeweiligen Kolbenwand 36 und dem zugeordneten wendelnutlosen Wellenabschnitt 32 Abdichtmaßnahmen vorgesehen, die einen Fluideintritt aus einem der Arbeitsräume 18, 19 in die Kolbenkammer 34 verhindern. Beispielsgemäß trägt jede der beiden Kolbenwände 36 wenigstens einen Dichtungsring 38, beispielsweise einen 0-Ring oder einen Lippen-Dichtring, der dynamisch dichtend an der Umfangsfläche des zugeordneten Wellenabschnittes 32 anliegt und an diesem bei Axialbewegung des Kolbens 13 entlanggleitet.

Am Kolben 13 sind beim Ausführungsbeispiel zwei Führungsglieder 42 angeordnet, die im Bereich des Umfanges des Antriebsabschnittes 27 in die Kolbenkammer 34 hineinragen und mit der beim Ausführungsbeispiel einzigen Wendelnut 28 in Eingriff stehen. Die beiden Führungsglieder 42 sind in Richtung der Längsachse 14 beabstandet zueinander angeordnet.

Die Führungsglieder 42 stützen sich am Kolben 13 ab. Bei axialer Verlagerung des Kolbens 13 infolge Fluidbeaufschlagung arbeiten die Führungsgl ieder 42 gegen die Flanken der Wendelnut 28, so daß auf die Abtriebswelle 23 ein Drehmoment ausgeübt wird, das sie zur Rotation veranlaßt. Dabei laufen die Führungsgl ieder 42 auf der Wendelnut 28 ab.

Entsprechend dem gewählten Hub des Kolbens 13 und der Länge des Antriebsabschnittes 27 und ferner unter Berücksichtigung der Nut- bzw. Gewindesteigung der Wendelnut 28 lassen sich Drehantriebe 1 konzipieren, die den Abgriff unterschiedlicher Drehwinkel am Abtriebsabschnitt 26 ermöglichen.

Die beiden Führungsglieder 42 des Ausführungsbeispiels sind in vorteilhafter Ausgestaltung von ringförmigen Wälzlagern 43, 44 gebildet, bei denen es sich vorzugsweise um Radiallager handelt und die beispielsgemäß als Kugellager konzipiert sind. Die Abtriebswelle 23 erstreckt sich durch beide Wälzlager 43, 44 hindurch, wobei letztere im Bereich des Außenumfanges des Antriebsabschnittes 27 liegen. Der Antriebsabschnitt 27 ist also von den Wälzlagern 43, 44, die mit axialem Abstand zueinander angeordnet sind, umgeben.

Die beiden Wälzlager 43, 44 verfügen jeweils über einen Außenring 45, der sich am Kolben 13 abstützt, indem er an diesem unbeweglich festgelegt ist. Beispielsgemäß erfolgt die Festlegung derart, daß für jedes Wälzlager 43, 44 ein sich quer zur Längsachse 14 erstreckender Einschnitt 46 in den Kolben 13 eingebracht ist, in den die Wälzlager 43, 44 so weit eingeschoben bzw. eingesteckt sind, daß der Antriebsabschnitt 27 hindurchgeführt werden kann. An der offenen Seite der Einschnitte 46 plazierte Halteglieder 47 sorgen dafür, daß die Wälzlager 43, 44 radial unbeweglich in den als Lageraufnahmen fungierenden Einschnitten 46 fixiert sind. Der Außenring 45 liegt somit mit zumindest einem Teil seiner Dicke entlang seines gesamten Umfanges im zugeordneten Einschnitt 46 fest.

Des weiteren verfügen die Wälzlager 43, 44 über einen bezüglich des Außenrings 45 über beispielsgemäß kugelförmige Wälzelemente 48 drehbar abgestützten Innenring 52. Dieser Innenring 52 trägt einen radial nach innen vorstehenden und zweckmäßigerweise ringförmigen Führungsvorsprung 53.

Zweckmäßigerweise sind die beiden Wälzlager 43, 44 mit Bezug zur Längsachse 14 des Antriebsabschnittes 27 exzentrisch angeordnet. Das Maß der Exzentrizität ist so gewählt, daß ein jeweiliger Innenring 52 nicht mit dem gesamten Umfang des Führungsvorsprunges 53 , sondern lediglich mit einem geringere Umfangserstreckung aufweisenden Umfangsabschnitt 54 desselben in die Wendelnut 28 eingreift.

Wird nun der Kolben 13 verschoben, wälzen sich die Innenringe 52 mit ihrem Führungsvorsprung 53 an den Flanken der Wendelnut 28 ab.

Die exzentrische Anordnung der beiden Wälzlager 43, 44 ist zweckmäßigerweise derart gewählt, daß die beiden in Fig. 2 kenntlich gemachten Zentren 43', 44' der ringförmigen Wälzlager 43, 44 auf einer gemeinsamen, die Längsachse 14 schneidenden Linie 55 liegen, und zwar auf einander entgegengesetzten Seiten der Längsachse 14. Der Abstand zur Längsachse 14 ist zweckmäßigerweise gleich gewählt.

Die vorgenannnte Maßnahme hat unter anderem den Zweck, eine ungleichförmige Querbelastung der Abtriebswelle 23 zu vermeiden. Es ergibt sich eine gewisse Kompensation der durch den Nuteingriff auf die Abtriebswelle 23 einwirkenden Biegebelastungen.

Die beiden Wälzlager 43, 44 sind zweckmäßigerweise derart angeordnet, daß ihre Führungsvorsprünge 53 entgegengesetzte Nutflanken 56, 57 der Wendelnut 28 beaufschlagen. Beispielsgemäß wirkt der Umfangsabschnitt 54 des links gelegenen Wälzlagers 43 mit der linken Nutflanke 56 zusammen, der Umfangsabschnitt 54 des rechts liegenden Wälzlagers 44 hingegen mit der rechts liegenden Nutflanke 57. Dies hat unter anderem den Vorteil einer praktisch spielfreien Einspannung des Antriebsabschnittes 27 bezüglich der Wälzlager 43, 44 und des Kolbens 13, so daß bei einer Änderung der Verschieberichtung des Kolbens 13 kein Leerhub auftritt, sondern jegliche Richtungsänderung der Kolbenbewegung unmittelbar in einer Drehrichtungsänderung der Abtriebswelle 23 resultiert. Dies ermöglicht sehr feinfühlige Drehwinkeleinstellungen.

Insbesondere im Zusammenhang mit den vorgenannten Ausführungen ist es ferner von Vorteil, wenn die Wälzlager 43, 44 wie beim Ausführungsbeispiel bezüglich der Abtriebswelle 23 schräggestellt sind. Auf diese Weise sind die Wälzlager 43, 44 so ausgerichtet, daß die Ringebenen, die von den Wälzlagern 43, 44 aufgespannt sind, insbesondere unter einem spitzen Winkel zu einer Radialebene bezüglich der Längsachse 14 verlaufen. Die Schrägstellung ist in Fig. 1 an den hinter der Schnittebene liegenden bogenförmigen Abschnitten 58 der Wälzlager 43, 44 zu erkennen.

Durch die Schrägstellung ergibt sich insbesondere eine noch bessere Beaufschlagung der zugeordneten Nutflanke 56, 57, was darin resultieren kann, daß die auf den Innenring 52 einwirkenden axialen Kraftkomponenten reduziert sind und die Hauptbeaufschlagung radial in den zugeordneten Außenring 45 geleitet wird.

Zweckmäßigerweise sind die beiden Wälzlager 43, 44 hinsichtlich ihrer Schrägstellung derart ausgerichtet, daß sich entgegengesetzte Schrägstellungen ergeben.

Grundsätzlich wäre es natürlich möglich, lediglich ein Führungsglied 42 insbesondere in Gestalt eines Wälzlagers vorzusehen. Ferner kann bei Bedarf auch eine größere Anzahl von Wälzlagern eingesetzt werden.

Indem die Abdichtung zwischen dem Kolben 13 und der Abtriebswelle 23 nicht im Bereich des die Wendelnut aufweisenden Antriebsabschnittes 27 erfolgt, sondern im Bereich der glattflächigen Wellenabschnitte 32, kann eine sehr zuverlässige und verschleißarme Abdichtung erzielt werden. Es kann insbesondere auch auf handelsübliche Abdichtelemente zurückgegriffen werden.

## Patentansprüche

1. Fluidbetätigter Drehantrieb, mit einem Gehäuse (2), das eine Gehäusekammer (6) vorgibt, die einen durch Fluidkraft zu einer Axialbewegung antreibbaren, bezüglich des Gehäuses (2) unverdrehbaren Kolben (13) enthält, mit einer an wenigstens einer Stirnseite aus dem Gehäuse (2) herausragenden, bezüglich des Gehäuses (2) drehbaren und zugleich axial unbeweglich fixierten Abtriebswelle (23) , die mit dem Kolben (13) in Drehantriebsverbindung steht und bei der Axialbewegung des Kolbens (13) zu einer Drehbewegung veranlaßt wird, indem eine sich bezüglich der Längsachse (14) der Abtriebswelle (23) axial und in Umfangsrichtung erstreckende abtriebswellenseitige Wendelnut (28) an mindestens einem in die Wendelnut (28) eingreifenden kolbenseitigen Führungsglied (42) entlangläuft, dadurch gekennzeichnet, daß die Wendelnut (28) von einem nach Art einer Gewindespindel ausgeführten Antriebsabschnitt (27) der Abtriebswelle (23) gebildet ist, dessen Länge geringer ist als die Länge der Gehäusekammer (6) und an den sich axial beidseits ein wendelnutloser Wellenabschnitt (32) der Abtriebswelle (23) anschließt, und daß der Antriebsabschnitt (27) in einer Kolbenkammer (34) im Innern des Kolbens (13) aufgenommen ist, deren axiale Länge größer ist als diejenige des Antriebsabschnittes (27) , wobei jede der beiden die Kolbenkammer (34) axialseitig abschließenden kolbenseitigen Wände (36) vom zugeordneten wendelnutlosen Wellenabschnitt (32) der Abtriebswelle (23) axial verschiebbar unter Abdichtung durchsetzt ist.

2. Drehantrieb nach Anspruch 1, dadurch gekennzeichnet, daß der Kolben (13) und die zu dem Kolben (13) komplementäre Gehäusekammer (16) unkreisförmig konturiert sind.

3. Drehantrieb nach Anspruch 2, dadurch gekennzeichnet, daß der Kolben (13) eine ellipensähnliche oder ovale Außenkontur aufweist, die partiell abgeflacht sein kann.

4. Drehantrieb nach einem der Ansprüche 1 bis 3, dadurch gekennzeichnet, daß das wenigstens eine Führungsglied (42) ein am Kolben (13) festgelegtes, den Antriebsabschnitt (27) umgebendes ringförmiges Wälzlager (43, 44) ist.

5. Drehantrieb nach Anspruch 4, dadurch gekennzeichnet, daß das Wälzlager (43, 44) exzentrisch mit Bezug zum Antriebsabschnitt (27) angeordnet ist.

6. Drehantrieb nach Anspruch 4 oder 5, dadurch gekennzeichnet, daß das Wälzlager (43, 44) ein Kugellager ist.

7. Drehantrieb nach einem der Ansprüche 4 bis 6, dadurch gekennzeichnet, daß das Wälzlager (43, 44) einen sich am Kolben (13) abstützenden Außenring (45) und einen mit dem Antriebsabschnitt (27) zusammenarbeitenden Innenring (52) aufweist, wobei an dem Innenring (52) ein radial nach innen vorstehender ringförmiger Führungsvorsprung (53) vorgesehen ist, der mit einer Stelle seines Umfanges in Eingriff mit der Wendelnut (28) steht und sich in dieser abwälzen kann.

8. Drehantrieb nach einem der Ansprüche 5 bis 7, dadurch gekennzeichnet, daß wenigstens zwei axial beabstandete Wälzlager (43, 44) vorhanden sind, deren Zentren (43', 44') auf entgegengesetzten Seiten der Längsachse (14) der Abtriebswelle (23) liegen.

9. Drehantrieb nach einem der Ansprüche 5 bis 8, dadurch gekennzeichnet, daß wenigstens ein Wälzlager (43, 44) bezüglich der Abtriebswelle (23) schräggestellt ist, so daß die Ringebene des Wälzlagers (43, 44) unter einem Winkel zu einer Radialebene verläuft.

10. Drehantrieb nach Anspruch 9, dadurch gekennzeichnet, daß wenigstens zwei Wälzlager (43, 44) vorhanden sind, die mit einander entgegengesetzten Richtungen schräggestellt sind.

11. Drehantrieb nach einem der Ansprüche 1 bis 10, dadurch gekennzeichnet, daß zur Abdichtung der Kolbenkammer (34) an beiden axialen Endbereichen des Kolbens (13) jeweils mindestens ein den zugeordneten Wellenabschnitt (32) koaxial umschließender Dichtungsring (38) angeordnet ist.

12. Drehantrieb nach einem der Ansprüche 1 bis 11, dadurch gekennzeichnet, daß die Wendelnut (28) nach Art eines Steilgewindes ausgebildet ist.
